# EUROPÄISCHE PATENTSCHRIFT

(11) **EP 1 774 161 B1**
(45) Veröffentlichungstag und Bekanntmachung des Hinweises auf die Patenterteilung: **07.05.2008**
(21) Anmeldenummer: 05769758.3
(22) Anmeldetag: 20.07.2005
(51) Int. Cl.: F02D 41/40, F02D 13/02, F02D 41/00, F02D 35/02

(54) **VERFAHREN UND VORRICHTUNG ZUM STEUERN EINER BRENNKRAFTMASCHINE**
METHOD AND DEVICE FOR CONTROLLING AN INTERNAL COMBUSTION ENGINE
PROCEDE ET DISPOSITIF POUR COMMANDER UN MOTEUR A COMBUSTION INTERNE

(30) Priorität: 05.08.2004 DE 102004038121
(43) Veröffentlichungstag der Anmeldung: 18.04.2007
(73) Patentinhaber: VDO Automotive AG, 93055 Regensburg (DE)
(72) Erfinder: ELLMER, Dietmar, 93059 Regensburg (DE); HERWEG, Rüdiger, 73734 Esslingen (DE); LAUER, Thorsten, 93183 Holzheim a. Forst (DE); MLADEK, Michael, 76228 Karlsruhe (DE); STELTER, Mayk, 70329 Stuttgart (DE)
(86) Internationale Anmeldenummer: PCT/EP2005/053497
(87) Internationale Veröffentlichungsnummer: WO 2006/015929

(56) Entgegenhaltungen:
- EP-A- 1 138 896
- WO-A-02/095191
- DE-C1- 4 318 504

## Beschreibung

Die Erfindung betrifft ein Verfahren und eine Vorrichtung zum Steuern einer Brennkraftmaschine mit mindestens einem Zylinder, in dem ein Brennraum ausgebildet ist, mit einem Ansaugtrakt, der abhängig von der Stellung eines Gaseinlassventils mit dem Brennraum des Zylinders kommuniziert, mit einem Abgastrakt, der abhängig von der Stellung eines Gasauslassventils mit dem Brennraum des Zylinders kommuniziert, und mit einem Zylinderdrucksensor, der den Druck in dem Brennraum des Zylinders erfasst.

Steigende Energiekosten und Verschärfungen gesetzlicher Bestimmungen bezüglich des zulässigen Kraftstoffverbrauchs oder der zulässigen Schadstoffemissionen von Kraftfahrzeugen, in denen Brennkraftmaschinen angeordnet sind, machen es erforderlich, Maßnahmen zu ergreifen, um einerseits den Kraftstoffverbrauch von Brennkraftmaschinen zu senken und andererseits sicherzustellen, dass die von dem Kraftfahrzeug ausgestoßenen Schadstoffemissionen geringe Werte einnehmen. In diesem Zusammenhang ist es bekannt geworden, Brennkraftmaschinen, insbesondere benzinbetriebene, in bestimmten Betriebspunkten mit einem selbstzündenden Brennverfahren zu betreiben, das auch als Homogeneous Charge Compression (HCCI) Ignition, Compressed Auto Ignition (CAI) oder Raumzündungsverfahren (RZV) genannt wird. Bei diesem selbstzündenden Brennverfahren wird die Selbstzündung und damit der Verbrennungsverlauf über die reaktive Energiemenge in dem Zylinder der Brennkraftmaschine gesteuert. Diese Energiemenge wird unter anderem durch einen im Vergleich zum konventionell gezündeten Ottomotorenbetrieb sehr hohen Restgasanteil bereitgestellt. Auch für konventionell gezündete Ottomotoren ist es bekannt, im unteren und mittleren Teillastbereich die Brennkraftmaschine mit einer hohen Abgasrückführrate zu betreiben, um die Verbrennung bezüglich der Gütekriterien Verbrauch und Emissionen zu optimieren.

Aus der DE 199 007 38 C1 ist ein Verfahren zum Bestimmen eines Brennraumdruckverlaufs bei einer Brennkraftmaschine bekannt. Bei dem Verfahren wird ein Schätzwert eines Zylinderdrucks abhängig von einem vorangegangenen Messwert des Zylinderdrucks, einem diesem zugeordneten Volumen des Zylinders und einem dem Schätzwert des Zylinderdrucks zugeordneten Volumen des Zylinders und eines Polytropenexponenten mittels der Polytropengleichung abgeschätzt. Der Polytropenexponent ist vorgegeben abhängig von einer Kühlmitteltemperatur.

Aus der EP 0 399 069 A1 ist ein weiteres Verfahren zum Bestimmen des Brennraumdrucks in einem Zylinder einer Brennkraftmaschine bekannt. Dazu wird eine Empfindlichkeit des dieser Brennkraftmaschine zugeordneten Zylinderdrucksensors in jedem Arbeitszyklus des Zylinders ermittelt und zwar abhängig von drei Spannungsmesssignalen und einem vorgegebenen Polytropenexponenten.

Aus der EP 1 138 896 A2 ist es bekannt, einen vorgegebenen Polytropenexponenten zur Schätzung eines Druckes während der Abgasrückhaltephase zu verwenden.

Aufgabe der Erfindung ist es, ein Verfahren und eine Vorrichtung zum Steuern einer Brennkraftmaschine zu schaffen, die ein präzises Steuern der Brennkraftmaschine gewährleisten.

Die Erfindung zeichnet sich aus durch ein Verfahren und eine entsprechende Vorrichtung zum Steuern einer Brennkraftmaschine mit mindestens einem Zylinder, in dem ein Brennraum ausgebildet ist, mit einem Ansaugtrakt, der abhängig von der Stellung eines Gaseinlassventils mit dem Brennraum des Zylinders kommuniziert, mit einem Abgastrakt, der abhängig von der Stellung eines Gasauslassventils mit dem Brennraum des Zylinders kommuniziert, und mit einem Zylinderdrucksensor, der den Druck in dem Brennraum des Zylinders erfasst. Ein Polytropenexponent wird bestimmt abhängig von mindestens zwei Messwerten des Drucks in dem Brennraum, die nach einem Schließen des Gasauslassventils und vor einem darauf folgenden Öffnen des Gaseinlassventils erfasst werden. Eine Abgasmasse wird ermittelt, die sich nach dem Schließen des Gasauslassventils und vor dem darauf folgenden Öffnen des Gaseinlassventils in dem Zylinder befindet, und zwar abhängig von dem Polytropenexponenten, einem Schätzwert des Drucks nach dem Schließen des Gasauslassventils und vor dem darauf folgenden Öffnen des Gaseinlassventils und einer Temperatur des Abgases, das sich nach dem Schließen des Gasauslassventils und vor dem darauf folgenden Öffnen des Gaseinlassventils in dem Zylinder befindet. Ein Stellsignal zum Steuern eines Stellglieds der Brennkraftmaschine wird erzeugt abhängig von der ermittelten Abgasmasse. Auf diese Weise kann die Abgasmasse sehr präzise ermittelt werden. Die Abgasmasse ist ein wichtiger Parameter für eine präzise Einstellung der gewünschten folgenden Verbrennung eines Luft/Kraftstoff-Gemisches in den folgenden Arbeitstakt des Zylinders.

Vorteilhaft wird der Schätzwert des Drucks in dem Brennraum, der zum Ermitteln der Abgasmasse eingesetzt wird, abhängig von einem Messwert des Drucks ermittelt, der in einer Hochdruckphase erfasst wird und zwar nach dem Schließen des Gasauslassventils und vor dem darauf folgenden Öffnen des Gaseinlassventils. Auf diese Weise kann der Schätzwert des Drucks in dem Brennraum in den häufigen Fällen, in denen der Zylinderdrucksensor zum Messen von hohen Drücken ausgelegt ist, sehr präzise ermittelt werden. Unter der Hochdruckphase wird in diesem Zusammenhang derjenige Kurbelwellenwinkelbereich verstanden, der sich in geeigneter Weise um das Maximum des Drucks in dem Brennraum des Zylinders nach dem Schließen des Gasauslassventils und vor dem darauf folgenden Öffnen des Gaseinlassventils befindet.

In einer weiteren vorteilhaften Ausgestaltung der Erfindung werden die mindestens zwei Messwerte, die zum Bestimmen des Polytropenexponenten eingesetzt werden, in der Hochdruckphase erfasst. Auf diese Weise kann der Polytropenexponent in den häufigen Fällen, in denen der Zylinderdrucksensor zum Messen von hohen Drücken ausgelegt ist, einfach sehr präzise ermittelt werden.

Gemäß einer weiteren vorteilhaften Ausgestaltung der Erfindung wird eine Gaskonstante ermittelt abhängig von einem Luft/Kraftstoff-Verhältnis in dem Brennraum vor der Verbrennung und die Abgasmasse wird abhängig von der Gaskonstanten ermittelt. Dies hat den Vorteil, dass die Abgasmasse noch präziser ermittelt werden kann und zudem das Luft/Kraftstoff-Verhältnis in dem Brennraum ohnehin im Rahmen einer Lambda-Regelung ermittelt ist und somit ohne zusätzlichen Aufwand verfügbar ist.

Gemäß einer weiteren vorteilhaften Ausgestaltung der Erfindung wird die Temperatur des Abgases, das sich nach dem Schließen des Gasauslassventils und vor dem darauf folgenden Öffnen des Gaseinlassventils in dem Brennraum des Zylinders befindet, abhängig von einer erfassten Temperatur des Abgases in dem Abgastrakt ermittelt. Dies hat den Vorteil, dass die Temperatur des Abgases, das sich nach den Schließen des Gasauslassventils und vor dem darauf folgenden Öffnen des Gaseinlassventils in dem Brennraum befindet, sehr einfach ermittelt werden kann.

In diesem Zusammenhang ist es ferner vorteilhaft, wenn die Temperatur des Abgases, das sich nach dem Schließen des Gasauslassventils und vor dem darauf folgenden Öffnen des Gaseinlassventils in dem Zylinder befindet, abhängig von der Drehzahl der Brennkraftmaschine ermittelt wird. Auf diese Weise können einfach Einflüsse durch einen Wärmeübergang im Bereich eines Kolbens oder einer Wandung des Zylinders berücksichtigt werden.

Gemäß einer weiteren vorteilhaften Ausgestaltung der Erfindung wird eine erste Kraftstoffmasse, die nach dem Schließen des Gasauslassventils und vor dem Öffnen des Gaseinlassventils in dem Brennraum des Zylinders gemessen werden soll, abhängig von der ermittelten Abgasmasse ermittelt und das Einspritzventil wird entsprechend angesteuert. Dies ist insbesondere bei einem selbstzündenden Brennverfahren von Vorteil, bei dem bevorzugt eine hohe Abgasrückführrate eingestellt wird, um hohe Zündtemperaturen zu erreichen. Durch das Ermitteln der ersten Kraftstoffmasse abhängig von der ermittelten Abgasmasse kann so der Verbrennungsschwerpunkt präzise eingestellt werden.

In diesem Zusammenhang ist es auch vorteilhaft, wenn ein Kurbelwellenwinkel, zu dem die erste Kraftstoffmasse zugemessen wird, abhängig von der ermittelten Abgasmasse ermittelt wird. Auf diese Weise kann der Verbrennungsschwerpunkt bei einem selbstzündenden Brennverfahren präzise eingestellt werden.

In einer weiteren vorteilhaften Ausgestaltung der Erfindung wird der Kurbelwellenwinkel, zu dem eine zweite Kraftstoffmasse zugemessen wird, abhängig von der ermittelten Abgasmasse ermittelt. Die zweite Kraftstoffmasse wird nach dem Öffnen des Gaseinlassventils in den Zylinder zugemessen. Auch auf diese Weise kann ein Verbrennungsschwerpunkt bei einem selbstzündenden Brennverfahren präzise eingestellt werden.

Ausführungsbeispiele der Erfindung sind im Folgenden anhand der schematischen Zeichnungen erläutert. Es zeigen:
- Figur 1: eine Brennkraftmaschine mit einer Steuereinrichtung,
- Figur 2: ein Ablaufdiagramm eines ersten Teils eines Programms zum Steuern der Brennkraftmaschine und

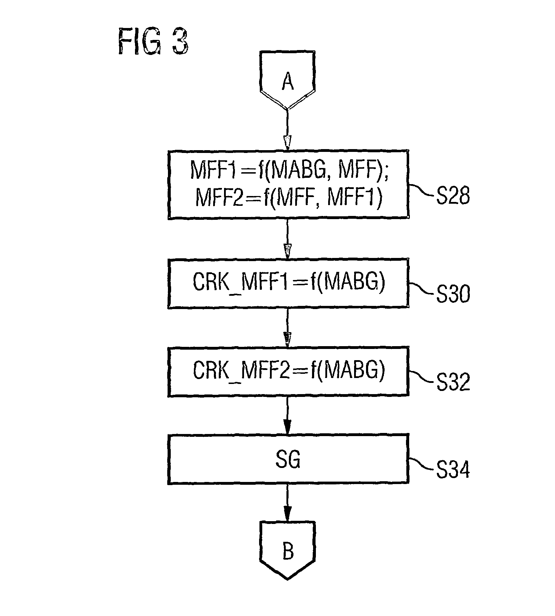

- Figur 3: ein Ablaufdiagramm eines zweiten Teils des Programms zum Steuern der Brennkraftmaschine.

Elemente gleicher Konstruktion oder Funktion sind figurenübergreifend mit den gleichen Bezugszeichen gekennzeichnet.

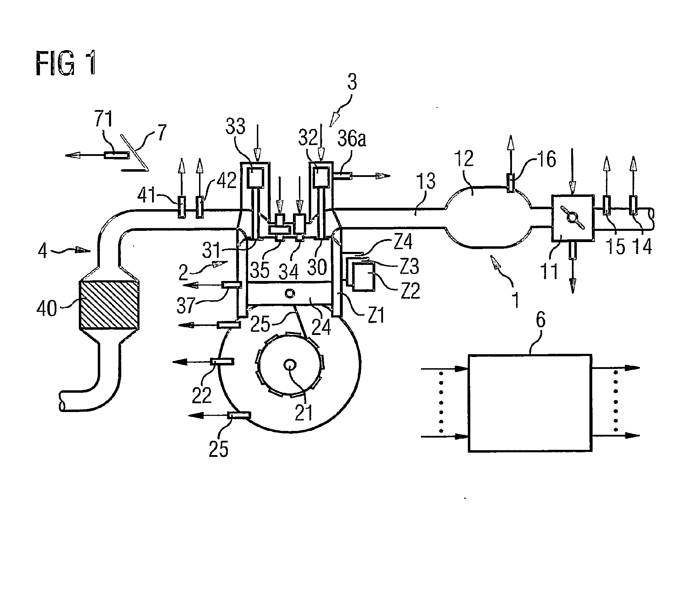

Eine Brennkraftmaschine (Figur 1) umfasst einen Ansaugtrakt 1, einen Motorblock 2, einen Zylinderkopf 3 und einen Abgastrakt 4. Der Ansaugtrakt 1 umfasst vorzugsweise eine Drosselklappe 11, ferner einen Sammler 12 und ein Saugrohr 13, das hin zu einem Zylinder Z1 über einen Einlasskanal in den Motorblock 2 geführt ist. Der Motorblock 2 umfasst ferner eine Kurbelwelle 21, welche über eine Pleuelstange 25 mit dem Kolben 24 des Zylinders Z1 gekoppelt ist.

Der Zylinderkopf 3 umfasst einen Ventiltrieb mit einem Gaseinlassventil 30, einem Gasauslassventil 31 und Ventilantrieben 32, 33. Der Zylinderkopf 3 umfasst ferner ein Einspritzventil 34 und eine Zündkerze 35. Alternativ kann das Einspritzventil 34 auch in dem Saugrohr 13 angeordnet sein.

Der Abgastrakt 4 umfasst einen Katalysator 40, der bevorzugt als Dreiwegekatalysator ausgebildet ist.

Ferner ist eine Steuereinrichtung 6 vorgesehen, der Sensoren zugeordnet sind, die verschiedene Messgrößen erfassen und jeweils den Messwert der Messgröße ermitteln. Die Steuereinrichtung 6 ermittelt abhängig von mindestens einer der Messgrößen Stellgrößen, die dann in ein oder mehrere Stellsignale zum Steuern der Stellglieder mittels entsprechender Stellantriebe umgesetzt werden. Die Steuereinrichtung 6 kann auch als Vorrichtung zum Steuern der Brennkraftmaschine bezeichnet werden.

Die Sensoren sind ein Pedalstellungsgeber 71, welcher die Stellung eines Fahrpedals 7 erfasst, ein Luftmassenmesser 14, welcher einen Luftmassenstrom stromaufwärts der Drosselklappe 11 erfasst, ein Temperatursensor 15, welcher die Ansauglufttemperatur erfasst, ein Kurbelwellenwinkelsensor 22, welcher einen Kurbelwellenwinkel CRK erfasst, dem dann eine Drehzahl N zugeordnet wird, ein weiterer Temperatursensor 42, der eine Abgastemperatur TABG in dem Abgastrakt 4 erfasst, ein Nockenwellenwinkelsensor 36a, der einen Nockenwellenwinkel erfasst, ein Zylinderdrucksensor 37, der einen Druck p in einem Brennraum des Zylinders Z1 erfasst, und eine Abgassonde 41 welche einen Restsauerstoffgehalt des Abgases erfasst und deren Messsignal charakteristisch ist für das Luft/Kraftstoff-Verhältnis in dem Zylinder Z1. Je nach Ausführungsform der Erfindung kann eine beliebige Untermenge der genannten Sensoren oder es können auch zusätzliche Sensoren vorhanden sein.

Die Stellglieder sind beispielsweise die Drosselklappe 11, die Gaseinlass- und Gasauslassventile 30, 31, das Einspritzventil 34 und die Zündkerze 35.

Neben dem Zylinder Z1 können auch noch weitere Zylinder Z2-Z4 vorgesehen sein, denen dann auch entsprechende Stellglieder zugeordnet sind.

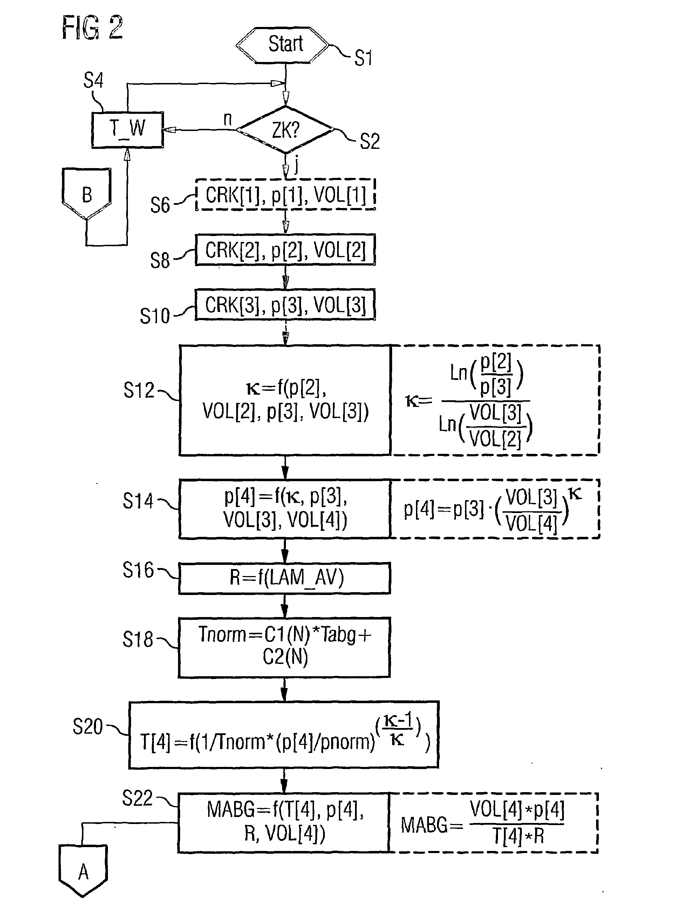

Ein Programm zum Steuern der Brennkraftmaschine wird in einem Schritt S1 (Figur 2) gestartet, in dem gegebenenfalls Variablen initialisiert werden.

In einem Schritt S2 wird geprüft, ob der jeweilige Zylinder sich gerade in einer Zwischenkompression ZK befindet. Unter der Zwischenkompression ZK wird derjenige Kurbelwellenwinkelbereich verstanden, während dessen sowohl das Gasauslassventil 31 als auch das Gaseinlassventil 30 geschlossen sind und zwar nach dem Schließen des Gasauslassventils 31 und vor einem darauf folgenden Öffnen des Gaseinlassventils 30.

Ist die Bedingung des Schrittes S2 nicht erfüllt, so wird das Programm in einem Schritt S4 fortgesetzt, in dem es für eine vorgegebene Wartezeitdauer T_W oder einen vorgegebenen Kurbelwellenwinkel verharrt, bevor die Bedingung des Schrittes S2 erneut geprüft wird.

Ist die Bedingung des Schrittes S2 hingegen erfüllt, so wird in einem Schritt S6 ein erster Messwert p[1] des Drucks in dem Brennraum des Zylinders Z1 mittels des Zylinderdrucksensors 37 erfasst. Die bei den nachfolgenden Größen in Klammern angegebene Zahlen beziehen sich jeweils auf zugehörige Werte bei jeweils einem Kurbelwellenwinkel CRK. Der erste Messwert p[1] ist somit erfasst, wenn der Kurbelwellenwinkel CRK [1] ist. VOL[1] ist das zugehörige Volumen des Brennraums des Zylinders Z1.

In einem Schritt S8 werden bei einem Kurbelwellenwinkel CRK[2] ein zweiter Messwert p[2] des Drucks in dem Brennraum des Zylinders Z1 erfasst und das zugehörige Volumen VOL[2] des Brennraums ermittelt. In einem Schritt S10 wird bei einem Kurbelwellenwinkel CRK[3] ein dritter Messwert p[3] des Drucks in dem Brennraum des Zylinders Z1 erfasst und das zugehörige Volumen VOL [3] des Brennraums des Zylinders Z1 zugeordnet. Insbesondere, wenn der Zylinderdrucksensor 37 ausgelegt ist zum Erfassen hoher Drücke in dem Brennraum des Zylinders Z1, sind die Kurbelwellenwinkel CRK[1], CRK[2] und CRK[3] vorteilhaft in einer Hochdruckphase der Zwischenkompression ZK gewählt. Der höchste Druck wird während der Zwischenkompression in der Nähe des oberen Totpunktes des Kolbens des Zylinders Z1 erreicht.

In einem Schritt S12 wird anschließend ein Polytropenexponent K abhängig von dem zweiten Messwert p[2] des Drucks in dem Brennraum des Zylinders Z1, des diesem zugeordnetem Volumens VOL[2] des Brennraums des Zylinders Z1, des dritten Messwertes p[3] des Drucks in dem Brennraum des Zylinders Z1 und des zugeordneten Volumens VOL[3] ermittelt. Dies erfolgt vorzugsweise mittels entsprechender Auflösung der Polytropengleichung nach dem Polytropenexponenten κ, wie es beispielhaft in dem rechten Teil des Schrittes S12 wiedergegeben ist.

Bevorzugt wird der Polytropenexponent K gemittelt durch mehrfaches Ermitteln des Polytropenexponenten K mittels verschiedener Permutationen der Wertepaare der Schritte S6 bis S10. So können Messfehler verringert werden und der Polytropenexponent κ somit noch genauer ermittelt werden.

In einem Schritt S14 wird dann ein Schätzwert p[4] des Drucks in dem Brennraum des Zylinders Z1 ermittelt, vorzugsweise für einen Kurbelwellenwinkel CRK in der Nähe des Schließens des Gasauslassventils. Dieses erfolgt vorzugsweise abhängig von dem Polytropenexponent κ, von dem dritten Messwert p[3], von dem diesem zugeordneten Volumen VOL[3] des Brennraums des Zylinders Z1 und von dem dem Schätzwert p[4] des Drucks in dem Brennraum des Zylinders Z1 zugeordneten Volumens VOL[4]. Alternativ kann hier auch ein anderer Messwert des Drucks und ein entsprechend zugeordnetes Volumen verwendet werden. Ferner kann auch bei geeigneter Ausbildung des Zylinderdrucksensors 37 der Schätzwert p[4] des Drucks in dem Brennraum des Zylinders ein entsprechender Messwert sein.

Das Ermitteln des Schätzwertes p[4] des Drucks in dem Brennraum des Zylinders Z1 erfolgt vorzugsweise mittels der in dem Schritt S14 auf der rechten Seite angegebenen Formel.

In einem Schritt S16 wird eine Gaskonstante R bevorzugt abhängig von einem Istwert LAM_AV des Luft/Kraftstoff-Verhältnisses in dem Brennraum des Zylinders vor der Verbrennung des Luft/Kraftstoff-Verhältnisses ermittelt, das von dem Messsignal der Sauerstoffsonde 41 abgeleitet ist. In einer einfacheren Ausgestaltung des Programms wird der Gaskonstanten R in dem Schritt S16 ein vorgegebener Wert zugeordnet. Auch so kann eine für den Einzelfall ausreichende Genauigkeit bei der weiteren Berechung sichergestellt werden, wenn die Gaskonstante R nur eine geringe Variabilität hat.

In einem Schritt S18 wird eine Referenztemperatur Tnorm abhängig von der Abgastemperatur TABG ermittelt, die von dem weiteren Temperatursensor 42 in dem Abgastrakt 4 erfasst wird. Ferner erfolgt das Ermitteln der Referenztemperatur Tnorm abhängig von einem Steigungswert C1 und einem Verschiebungswert C2. Der Steigungswert und der Verschiebungswert C1 und C2 sind bevorzugt für verschiedene Drehzahlen vorab durch Versuche mit der Brennkraftmaschine oder Simulationen ermittelt und in einem Kennfeld abhängig von der Drehzahl N abgelegt. Die Referenztemperatur Tnorm wird so bevorzugt mittels der in dem Schritt S18 angegebenen Formel ermittelt und ist bezogen auf einen Referenzdruck Pnorm in dem Brennraum des Zylinders Z1. Alternativ können der Steigungswert und der Verschiebungswert C1, C2 auch als analytische Funktionen der Drehzahl N und gegebenenfalls einer Voreinspritzung bestimmt werden. Die Abgastemperatur TABG, die von dem weiteren Temperatursensor 42 erfasst wird, wird bevorzugt möglichst zeitnah zu dem Schließen des Gasauslassventils erfasst.

In einem Schritt S20 wird die Temperatur T[4] des Abgases in dem Brennraum des Zylinders ermittelt, die dem Schätzwert p[4] des Drucks in dem Brennraum des Zylinders zuzuordnen ist. Dies erfolgt bevorzugt unter entsprechender Anwendung der Polytropengleichung abhängig von der Referenztemperatur Tnorm, dem Druck p[4] in dem Brennraum des Zylinders Z1 und dem Referenzdruck pnorm und dem Polytropenexponenten K.

Anschließend wird dann in einem Schritt S22 die Abgasmasse ermittelt, die sich nach dem Schließen des Gasauslassventils 33 und vor dem darauf folgenden Öffnen des Gaseinlassventils 32 in dem Zylinder Z1 befindet. Dies erfolgt unter Anwendung der idealen Gasgleichung abhängig von der Temperatur T[4], dem zugeordneten Schätzwert p[4] des Drucks in dem Brennraum des Zylinders Z1 der Gaskonstanten R und dem zugeordneten Volumen VOL[4] des Brennraums des Zylinders Z1. Bevorzugt ist der dem Druck p[4] zugeordnete Kurbelwellenwinkel so gewählt, dass zu diesem Zeitpunkt noch keine Zumessung einer zuzumessenden ersten Kraftstoffmasse MFF1 erfolgt ist. Ist dies der Fall, so ist ein einfaches Ermitteln der Abgasmasse MABG möglich. Falls dies nicht der Fall ist, sollte die zugeführte erste Kraftstoffmasse MFF1 hierbei noch berücksichtigt werden.

Gegebenenfalls kann es vorteilhaft sein die in dem Schritt S22 ermittelte Abgasmasse MABG noch mittels eines Korrekturwertes zu korrigieren, der Masseverluste durch Undichtigkeiten im Zylinder, so genanntes Blow-by berücksichtigt.

Die nachfolgenden Schritte S28 bis S32 werden abgearbeitet, wenn die Brennkraftmaschine mittels des Raumzündungsverfahrens betrieben wird. Wird die Brennkraftmaschine hingegen mittels eines anderen Brennverfahrens betrieben, so kann die ermittelte Abgasmasse MABG eine Eingangsgröße für beliebige Funktionen der Steuereinrichtung sein.

In dem Schritt S28 wird eine zuzuführende erste Kraftstoffmasse MFF1 abhängig von der Abgasmasse MABG und einer gesamt dem Zylinder Z1 während eines Arbeitsspiels des Zylinders Z1 zuzuführenden Kraftstoffmasse MFF ermittelt. Diese wird bevorzugt auch abhängig von der Abgasmasse MABG und/oder der Abgastemperatur TABG ermittelt. Die erste Kraftstoffmasse MFF1 wird während der Zwischenkompression ZK des Zylinders Z1 in dem Brennraum des Zylinders Z1 zugemessen.

Durch das Zumessen der ersten Kraftstoffmasse MFF1 während der Zwischenkompression ZK erfolgt aufgrund des in der Regel noch geringen Sauerstoffanteils in dem Abgas eine exotherme Reaktion und ein Fraktionieren des zugemessenen Kraftstoffs, wobei Radikale entstehen, die die spätere Entzündung und Verbrennung des Luft/Kraftstoff-Gemisches in dem Zylinder beschleunigen.

Durch die erste zuzuführende Kraftstoffmasse MFF1 kann so der Zeitpunkt der Selbstzündung des Luft/Kraftstoff-Gemisches wirksam eingestellt werden. Dabei spielt eine große Rolle, dass die Abgasmasse MABG sich von Arbeitsspiel zu Arbeitsspiel deutlich unterscheiden kann und dann wiederum einen starken Einfluss auf die Verbrennung des nächsten Arbeitsspiels nimmt. Dies kann durch entsprechendes Einstellen der ersten Kraftstoffmasse MFF1 ausgeglichen werden und so eine präzise Einstellung des Zündzeitpunktes des Luft/Kraftstoff-Gemisches erfolgen.

Ferner wird in dem Schritt S28 auch noch eine zweite Kraftstoffmasse abhängig von der gesamt dem Zylinder Z1 zuzumessenden Kraftstoffmasse MFF und der ersten Kraftstoffmasse MFF1 ermittelt. Dies erfolgt bevorzugt durch Bilden der Differenz der gesamt dem Zylinder Z1 zuzuführenden Kraftstoffmasse MFF und der ersten Kraftstoffmasse MFF1. Die zweite Kraftstoffmasse MFF2 wird erst nach dem Öffnen des Gaseinlassventils 30 in den Zylinder Z1 zugemessen.

Alternativ kann die zweite Kraftstoffmasse MFF2 abhängig von der Abgasmasse MABG und der zuzuführenden Kraftstoffmasse MFF ermittelt werden.

In einem Schritt S30 wird ein Kurbelwellenwinkel CRK_MFF1 des Zumessens der ersten Kraftstoffmasse MFF1 bevorzugt abhängig von der ermittelten Abgasmasse MABG ermittelt. Auch durch den Kurbelwellenwinkel CRK_MFF1 des Zumessens der ersten Kraftstoffmasse MFF1 kann vorteilhaft der Zündzeitpunkt des Luft/Kraftstoff-Gemisches in dem Zylinder Z1 beeinflusst werden.

In einem Schritt S32 wird ein Kurbelwellenwinkel CRK_MFF2 abhängig von der Abgasmasse MABG des Abgases ermittelt, der auch den Zündzeitpunkt des Luft/Kraftstoff-Gemisches in dem Zylinder Z1 beeinflusst.

Die Kurbelwellenwinkel CRK_MFF1, CRK_MFF2 des Zumessens der ersten bzw. zweiten Kraftstoffmasse MFF1, MFF2 werden bevorzugt auch abhängig von der Abgastemperatur TABG ermittelt.

In einem Schritt S34 werden dann entsprechende Stellsignale SG zum Ansteuern des Einspritzventils 34 ermittelt. Alternativ kann z.B. auch in den Schritten S30 und S32 der Kurbelwellenwinkel CRK_MFF1 und/oder der Kurbelwellenwinkel CRK_MFF2 des Zumessens der ersten bzw. zweiten Kraftstoffmasse MFF1, MFF2 unabhängig von der ermittelten Abgasmasse MABG sein. Ferner kann alternativ auch die erste Kraftstoffmasse MFF1 unabhängig von der ermittelten Abgasmasse MABG sein.

Zum Ansteuern der Einspritzventile 34 weiterer Zylinder Z2 bis Z4 werden in der Steuereinrichtung 6, die auch als Vorrichtung zum Steuern der Brennkraftmaschine bezeichnet werden kann, entsprechende Programme abgearbeitet.

Die zum Ermitteln des Polytropenexponenten K notwendigen Logarithmusrechnungen werden vorteilhaft mittels entsprechender Kennfelder, die vorab ermittelt sind, umgesetzt.

## Patentansprüche

1. Verfahren zum Steuern einer Brennkraftmaschine mit mindestens einem Zylinder (Z1 - Z4), in dem ein Brennraum ausgebildet ist, mit einem Ansaugtrakt (1), der abhängig von der Stellung eines Gaseinlassventils (30) mit dem Brennraum des Zylinders (Z1 - Z4) kommuniziert, mit einem Abgastrakt (4), der abhängig von der Stellung eines Gasauslassventils (31) mit dem Brennraum des Zylinders (Z1 - Z4) kommuniziert und mit einem Zylinderdrucksensor (37), der den Druck (p) in dem Brennraum des Zylinders (Z1 - Z4) erfasst, bei dem
- ein Polytropenexponent (K) bestimmt wird abhängig von mindestens zwei Messwerten (p[1], p[2], p[3]) des Drucks (p) in dem Brennraum, die nach einem Schließen des Gasauslassventils (31) und vor einem darauf folgenden Öffnen des Gaseinlassventils (30) erfasst werden,
- eine Abgasmasse (MABG) ermittelt wird, die sich nach dem Schließen des Gasauslassventils (31) und vor dem darauf folgenden Öffnen des Gaseinlassventils (30) in dem Zylinder (Z1
- Z4) befindet, und zwar abhängig von dem Polytropenexponenten (κ), einem Schätzwert (p[4]) des Drucks (p) nach dem Schließen des Gasauslassventil (31) und vor dem darauf folgenden Öffnen des Gaseinlassventils (30) und einer Temperatur des Abgases, das sich nach dem Schließen des Gasauslassventils (31) und vor dem darauf folgenden Öffnen des Gaseinlassventils (30) in dem Zylinder (Z1 - Z4) befindet, und
- ein Stellsignal (SG) zum Steuern eines Stellglieds der Brennkraftmaschine erzeugt wird abhängig von der ermittelten Abgasmasse (MABG).

2. Verfahren nach Anspruch 1,
bei dem ein Messwert des Drucks (p), der zum Ermitteln des Schätzwertes (p[4]) des Drucks (p) in dem Brennraum des Zylinders (Z1- Z4) eingesetzt wird, in einer Hochdruckphase nach dem Schließen des Gasauslassventils (31) und vor dem darauf folgenden Öffnen des Gaseinlassventils (30) erfasst wird.

3. Verfahren nach einem der vorstehenden Ansprüche,
bei dem die mindestens zwei Messwerte (p[1], p[2], p[3]), die zum Bestimmen des Polytropenexponenten (κ) eingesetzt werden, in der Hochdruckphase erfasst werden.

4. Verfahren nach einem der vorstehenden Ansprüche,
bei dem eine Gaskonstante (R) ermittelt wird, abhängig von einem Luft/Kraftstoff-Verhältnis in dem Brennraum des Zylinders (Z1 - Z4) vor der Verbrennung des Luft/Kraftstoff-Gemisches und die Abgasmasse (MABG) abhängig von der Gaskonstanten (R) ermittelt wird.

5. Verfahren nach einem der vorstehenden Ansprüche,
bei dem die Temperatur des Abgases, das sich nach dem Schließen des Gasauslassventils (31) und vor dem darauf folgenden Öffnen des Gaseinlassventils (30) in dem Zylinder (Z1 - Z4) befindet, abhängig von einer erfassten Temperatur (TABG) des Abgases in dem Abgastrakt (4) ermittelt wird.

6. Verfahren nach Anspruch 5,
bei dem die Temperatur des Abgases, das sich nach dem Schließen des Gasauslassventils (31) und vor dem darauf folgenden Öffnen des Gaseinlassventils (30) in dem Zylinder (Z1 - Z4) befindet, abhängig von der Drehzahl (N) der Brennkraftmaschine ermittelt wird.

7. Verfahren nach einem der vorstehenden Ansprüche,
bei dem eine erste Kraftstoffmasse (MFF1), die nach dem Schließen des Gasauslassventils (31) und vor dem Öffnen des Gaseinlassventils (30) in den Brennraum des Zylinders (Z1 - Z4) zugemessen werden soll, abhängig von der ermittelten Abgasmasse (MABG) ermittelt wird und das Einspritzventil (34) entsprechend angesteuert wird.

8. Verfahren nach Anspruch 7,
bei dem ein Kurbelwellenwinkel (CRK_MFF1), an dem die erste Kraftstoffmasse (MFF1) zugemessen wird, abhängig von der ermittelten Abgasmasse (MABG) ermittelt wird.

9. Verfahren nach einem der Ansprüche 7 oder 8,
bei dem ein Kurbelwellenwinkel (CRK_MFF2), an dem eine zweite Kraftstoffmasse (MFF2) zugemessen wird, abhängig von der ermittelten Abgasmasse (MABG) ermittelt wird, wobei die zweite Kraftstoffmasse (MFF2) nach dem Öffnen des Gaseinlassventils (30) in den Zylinder (Z1 - Z4) zugemessen wird.

10. Vorrichtung zum Steuern einer Brennkraftmaschine mit mindestens einem Zylinder (Z1 - Z4), in dem ein Brennraum ausgebildet ist, mit einem Ansaugtrakt (1), der abhängig von der Stellung eines Gaseinlassventils (30) mit dem Brennraum des Zylinders (Z1 - Z4) kommuniziert, mit einem Abgastrakt (4), der abhängig von der Stellung eines Gasauslassventils (31) mit dem Brennraum des Zylinders (Z1 - Z4) kommuniziert und mit einem Zylinderdrucksensor (37), der den Druck (p) in dem Brennraum des Zylinders (Z1 - Z4) erfasst, mit Einheiten,
- die einen Polytropenexponent (K) bestimmen abhängig von mindestens zwei Messwerten (p[1], p[2], p[3]) des Drucks (p) in dem Brennraum, die nach einem Schließen des Gasauslassventils (31) und vor einem darauf folgenden Öffnen des Gaseinlassventils (30) erfasst werden,
- die eine Abgasmasse (MABG) ermitteln, die sich nach dem Schließen des Gasauslassventils (31) und vor dem darauf folgenden Öffnen des Gaseinlassventils (30) in dem Zylinder (Z1 - Z4) befindet, und zwar abhängig von dem Polytropenexponenten (κ), einem Schätzwert (p[4]) des Drucks (P) nach dem Schließen des Gasauslassventil (31) und vor dem darauf folgenden Öffnen des Gaseinlassventils (30) und einer Temperatur des Abgases, das sich nach dem Schließen des Gasauslassventils (31) und vor dem darauf folgenden Öffnen des Gaseinlassventils (30) in dem Zylinder (Z1 - Z4) befindet, und
- die ein Stellsignal (SG) zum Steuern eines Stellglieds der Brennkraftmaschine erzeugen abhängig von der ermittelten Abgasmasse (MABG) .

## Claims

1. A method for controlling an internal combustion engine comprising at least one cylinder (Z1 - Z4), in which a combustion chamber is embodied, and which comprises an intake tract (1), which communicates with the combustion chamber of the cylinder (Z1 - Z4) as a function of the position of a gas intake valve (30), and which comprises an exhaust gas tract (4), which communicates with the combustion chamber of the cylinder (Z1 - Z4) as a function of the position of a gas discharge valve (31), and with a cylinder pressure sensor (37), which detects the pressure (p) in the combustion chamber of the cylinder (Z1 - Z4), in which
- a polytropic exponent (K) is determined as a function of at least two measured values (p[1], p[2], p[3]) of the pressure (p) in the combustion chamber, said measured values being detected after closing the gas discharge valve (31) and before subsequent opening of the gas intake valve (30),
- an exhaust gas mass (MABG), which is located in the cylinder (Z1 - Z4) after closing the gas discharge valve (31) and before subsequent opening of the gas intake valve (30) is actually determined as a function of the polytropic exponent (K), at an estimated value (p[4]) of the pressure (p) after closing the gas discharge valve (31) and before subsequent opening of the gas intake valve (30) and at a certain temperature of the exhaust gas which is located in the cylinder (Z1 - Z4) after closing the gas discharge valve (31) and before subsequent opening of the gas intake valve (30), and
- an actuation signal (SG) for controlling an actuating member of the internal combustion engine is generated as a function of the determined exhaust gas mass (MABG).

2. Method according to claim 1,
in which a measured value of the pressure (p) that is used to determine the estimated value (p[4]) of the pressure (p) in the combustion chamber of the cylinder (Z1-Z4) is determined in a high-pressure phase and is done after closing the gas discharge valve (31) and before subsequent opening of the gas intake valve (30).

3. Method according to one of the preceding claims, in which the at least two measured values (p[1], p[2], p[3]), which are used to determine the polytropic exponent (K) are detected in the high-pressure phase.

4. Method according to one of the preceding claims, in which a gas constant (R) is determined as a function of an air-to-fuel ratio in the combustion chamber of a cylinder (Z1 - Z4) before the combustion of the air-to-fuel mixture and the exhaust gas mass (MABG) as a function of the gas constants (R).

5. Method according to one of the preceding claims, in which the temperature of the exhaust gas, located in the cylinder (Z1 - Z4) after closing the gas discharge valve (31) and before subsequent opening of the gas intake valve (30) is determined as a function of a detected temperature (TABG) of the exhaust gas in the exhaust gas tract (4).

6. Method according to claim 5,
in which the temperature of the exhaust gas, located in the cylinder (Z1 - Z4) after closing the gas discharge valve (31) and before subsequent opening of the gas intake valve (30) is determined as a function of the rotational speed (N) of the internal combustion engine.

7. Method according to one of the preceding claims, in which a first fuel mass (MFF1), which should be measured in the combustion chamber of the cylinder (Z1 - Z4) after closing the gas discharge valve (31) and before opening the gas intake valve (30) is determined as a function of the determined exhaust gas mass (MABG) and the injection valve (34) is actuated accordingly.

8. Method according to claim 7,
in which a crankshaft angle (CRK_MFF1) to which a first fuel mass (MFF1) is metered, is determined as a function of the determined exhaust gas mass (MABG).

9. Method according to one of the claims 7 or 8,
in which a crankshaft angle (CRK_MFF2) to which a second fuel mass (MFF2) is metered, is determined as a function of the determined exhaust gas mass (MABG) in which case a second fuel mass (MFF2) is metered in the cylinder (Z1 - Z4) after the opening of the gas intake valve (30).

10. Device for controlling an internal combustion engine comprising at least one cylinder (Z1 - Z4), in which a combustion chamber is embodied, and which comprises an intake tract (1), which communicates with the combustion chamber of the cylinder (Z1 - Z4) as a function of the position of a gas intake valve (30), and which comprises an exhaust gas tract (4), which communicates with the combustion chamber of the cylinder (Z1 - Z4) as a function of the position of a gas discharge valve (31), and with a cylinder pressure sensor(37), which detects the pressure (p) in the combustion chamber of the cylinder (Z1 - Z4), with units,
- which determine a polytropic exponent (K) as a function of at least two measured values (p[1], p[2], p[33) of the pressure (p) in the combustion chamber of the cylinder, said measured values being detected after closing the gas discharge valve (31) and before subsequent opening of the gas intake valve (30),
- which determine an exhaust gas mass (MABG), which is located in the cylinder (Z1 - Z4) after closing the gas discharge valve (31) and before subsequent opening of the gas intake valve (30) and is done as a function of the polytropic exponent (K), at an estimated value (p[4]) of the pressure (p) after closing the gas discharge valve (31) and before subsequent opening of the gas intake valve (30) as well as at a certain temperature of the exhaust gas which is located in the cylinder (Z1 - Z4) after closing the gas discharge valve (31) and before subsequent opening of the gas intake valve (30), and
- which generate an actuation signal (SG) for controlling an actuating member of the internal combustion engine as a function of the exhaust gas mass (MABG) determined.

## Revendications

1. Procédé pour commander un moteur à combustion interne comprenant au moins un cylindre (Z1 - Z4), dans lequel est formée une chambre de combustion, un conduit d'aspiration (1) qui communique avec la chambre de combustion du cylindre (Z1 - Z4) en fonction de la position d'une soupape d'admission des gaz (30), un conduit de gaz d'échappement (4) qui communique avec la chambre de combustion du cylindre (Z1 - Z4) en fonction de la position d'une soupape d'échappement des gaz (31) et un capteur de pression du cylindre (37) qui détecte la pression (p) dans la chambre de combustion du cylindre (Z1
- Z4), dans lequel
- un exposant polytropique (K) est déterminé en fonction d'au moins deux valeurs mesurées (p [1], p [2], p [3] de la pression (p) dans la chambre de combustion qui sont détectées après une fermeture de la soupape d'échappement des gaz (31) et avant une ouverture suivante de la soupape d'admission des gaz (30),
- une masse de gaz d'échappement (MABG) qui se trouve dans le cylindre (Z1 - Z4)) après la fermeture de la soupape d'échappement des gaz (31) et avant l'ouverture suivante de la soupape d'admission des gaz (30) est déterminée, plus précisément en fonction de l'exposant polytropique (k), d'une valeur estimée (p [4]) de la pression (p) après la fermeture de la soupape d'échappement des gaz (31) et avant l'ouverture suivante de la soupape d'admission des gaz (30) et d'une température des gaz d'échappement qui se trouvent dans le cylindre (Z1 - Z4) après la fermeture de la soupape d'échappement des gaz (31) et avant l'ouverture suivante de la soupape d'admission des gaz (30), et
- un signal de réglage (SG) pour la commande d'un organe de réglage du moteur à combustion interne est produit en fonction de la masse de gaz d'échappement (MABG) déterminée.

2. Procédé selon la revendication 1,
dans lequel une valeur mesurée de la pression (p) qui est réglée pour la détermination de la valeur estimée (p[4]) de la pression (p) dans la chambre de combustion du cylindre (Z1-Z4) est captée dans une phase de haute pression après la fermeture de la soupape d'échappement des gaz et avant l'ouverture suivante de la soupape d'admission des gaz.

3. Procédé selon l'une des revendications précédentes, dans lequel les au moins deux valeurs mesurées (p[1], p[2], p[3]) qui sont utilisées pour déterminer l'exposant polytropique (k) sont détectées dans la phase de haute pression.

4. Procédé selon une des revendications précédentes,
dans lequel une constante des gaz (R) est déterminée en fonction d'un rapport air/carburant dans la chambre de combustion du cylindre (Z1-Z4) avant la combustion du mélange air/carburant et la masse du gaz d'échappement (MABG) est déterminée en fonction de la constante des gaz (R).

5. Procédé selon une des revendications précédentes,
dans lequel la température des gaz d'échappement qui se trouvent dans le cylindre (Z1-Z4) après la fermeture de la soupape d'échappement des gaz et avant l'ouverture suivante de la soupape d'admission des gaz est déterminée en fonction d'une température détectée (TABG) des gaz d'échappement dans le conduit de gaz d'échappement (4).

6. Procédé selon la revendication 5, dans lequel la température des gaz d'échappement qui se trouvent dans le cylindre (Z1-Z4) après la fermeture de la soupape d'échappement des gaz et avant l'ouverture suivante de la soupape d'admission des gaz est déterminée en fonction de la vitesse de rotation (N) du moteur à combustion interne.

7. Procédé selon une des revendications précédentes,
dans lequel une première masse de carburant (MFF1) qui doit être introduite dans la chambre de combustion du cylindre (Z1-Z4) après la fermeture de la soupape d'échappement des gaz et avant l'ouverture suivante de la soupape d'admission des gaz est déterminée en fonction de la masse de gaz déterminée (MABG) et l'injecteur (34) est commandé de façon correspondante.

8. Procédé selon la revendication 7, dans lequel un angle de vilebrequin (CRK_MFF1) auquel la première masse de carburant (MFF1) est introduite est déterminé en fonction de la masse du gaz d'échappement déterminée (MABG).

9. Procédé selon une des revendications 7 ou 8, dans lequel un angle de vilebrequin (CRK_MFF2) auquel une deuxième masse de carburant (MFF2) est introduite est déterminé en fonction de la première masse de gaz d'échappement déterminée (MABG), la deuxième masse de carburant (MFF2) étant introduite dans le cylindre (Z1-Z4) après l'ouverture de la soupape d'admission des gaz (30).

10. Dispositif pour commander un moteur à combustion interne comprenant au moins un cylindre (Z1 - Z4), dans lequel est formée une chambre de combustion, un conduit d'aspiration (1) qui communique avec la chambre de combustion du cylindre (Z1 - Z4) en fonction de la position d'une soupape d'admission des gaz (30), un conduit de gaz d'échappement (4) qui communique avec la chambre de combustion du cylindre (Z1 - Z4) en fonction de la position d'une soupape d'échappement des gaz (31) et un capteur de pression du cylindre (37) qui détecte la pression (p) dans la chambre de combustion du cylindre (Z1
- Z4), avec des unités
- qui déterminent un exposant polytropique (K) en fonction d'au moins deux valeurs mesurées (p [1], p [2], p [3] de la pression (p) dans la chambre de combustion qui sont détectées après une fermeture de la soupape d'échappement des gaz (31) et avant une ouverture suivante de la soupape d'admission des gaz (30),
- qui déterminent une masse de gaz d'échappement (MABG) qui se trouve dans le cylindre (Z1 - Z4)) après la fermeture de la soupape d'échappement des gaz (31) et avant l'ouverture suivante de la soupape d'admission des gaz (30), plus précisément en fonction de l'exposant polytropique (k), d'une valeur estimée (p [4]) de la pression (p) après la fermeture de la soupape d'échappement des gaz (31) et avant l'ouverture suivante de la soupape d'admission des gaz (30) et d'une température des gaz d'échappement qui se trouvent dans le cylindre (Z1 - Z4) après la fermeture de la soupape d'échappement des gaz (31) et avant l'ouverture suivante de la soupape d'admission des gaz (30), et
- qui produisent un signal de réglage (SG) pour la commande d'un organe de réglage du moteur à combustion interne en fonction de la masse de gaz d'échappement (MABG) déterminée.
